**Europäisches Patentamt**

(19) **European Patent Office**

**Office européen des brevets**

(11) Publication number : **0 463 284 B1**

(12) # EUROPEAN PATENT SPECIFICATION

(45) Date of publication of patent specification :
**29.12.93 Bulletin 93/52**

(51) Int. Cl.⁵ : **A23B 4/20,** A23B 4/08,
**A23B 4/12,** A23B 4/22,
A23B 4/023

(21) Application number : **91100327.5**

(22) Date of filing : **11.01.91**

(54) Method and composition for extending the shelf life of meats.

(30) Priority : **24.04.90 US 514681**

(43) Date of publication of application :
**02.01.92 Bulletin 92/01**

(45) Publication of the grant of the patent :
**29.12.93 Bulletin 93/52**

(84) Designated Contracting States :
**AT BE CH DE DK ES FR GB GR IT LI LU NL SE**

(56) References cited :
**GB-A- 1 562 568**
**US-A- 3 899 594**
**US-A- 4 883 673**

(73) Proprietor : **MICROLIFE TECHNICS, INC.**
**1833 57th Street**
**Sarasota, Florida 34230 (US)**

(72) Inventor : **Boudreaux, Donald P.**
**4122 Centergate Boulevard**
**Sarasota, Florida 34233 (US)**
Inventor : **Matrozza, Mark A.**
**4527 Little John Trail**
**Sarasota, Florida 34232 (US)**

(74) Representative : **Patentanwälte Grünecker,**
**Kinkeldey, Stockmair & Partner**
**Maximilianstrasse 58**
**D-80538 München (DE)**

Jouve, 18, rue Saint-Denis, 75001 PARIS

EP 0 463 284 B1

## Description

The present invention relates to a method for inhibiting the growth of bacteria in a raw or cooked processed meat at temperatures above freezing and at near neutral pH's with an inorganic propionate salt thereby extending the shelf life of the meat. The present invention relates to preferred compositions including a bacteriocin which are useful in the method. In particular the present invention relates to the use of low levels of a sodium propionate or calcium propionate salt, and preferably the bacteriocin, in the processed meat, such as beef, poultry or fish and mixtures thereof, for this purpose.

## Prior Art

The prior art has used propionate salts in various processed foods. Examples are U.S. Patent No. 3,899,594 to Nickerson et al and British Patent application No. 1,562,568, filed March 12, 1980, and British Patent Application No. 1,275,480. The propionates are used in low pH foods, less than pH 6.0. British Patent No. 1,275,480 indicates that the propionate salts require a low pH to be effective. It had not been thought that the propionate salts would be useful against bacteria at low levels in higher pH processed meats at temperatures above freezing probably because propionates, considered to be mycostats, are not effective against mold at high (greater than 5.3) pH. British Patent No. 1,562,568 describes the use of sodium propionate in frozen meats as a mycostat at pH 5.5 to 7.0 without any specific amounts being disclosed. Freezing greatly reduces the risk of microbial growth and also reduces the taste of the meat. Woolford and Anderson, Food Industries 17:622 (1945) describes the use of propionates in various foods for inhibiting various bacteria and molds, but not in meats at temperatures above freezing.

U.S. Patent No. 4,883,673 to Gonzalez describes the use of bacteriocins in foods. The bacteriocins are not described as useful with propionates.

The shelf life of packaged (canned or fresh packaged) processed meat products is limited by bacterial spoilage. This spoilage is caused primarily by gram-negative bacteria and secondarily by lactic acid producing bacteria. One solution to this problem is to freeze the product during distribution to inhibit spoilage. This practice detracts from the fresh concept of the product and taste, increases the product cost and is a problem if there is a failure in the freezing. It would be preferred to refrigerate the meat preferably at between about 4°C to 12°C. A method is needed for slowing the growth of pathogens at these temperatures in meat.

## OBJECTS

It is therefore an object of the present invention to provide a method for inhibiting the growth of bacteria in a processed meat to extend shelf life. Further, it is an object of the present invention to provide a method which is simple and economical and which does not impart an off taste to the meat. Further still, it is an object of the present invention to provide preferred compositions incorporating a bacteriocin and a propionate adapted for use in the processed meat. These and other objects will become increasingly apparent by reference to the following description.

## GENERAL DESCRIPTION

The present invention relates to a method for protecting an unspoiled processed meat having a pH between pH 6.0 and 6.5 which comprises: inoculating the meat with a source of an inorganic propionate salt in an amount less than 1% by weight which inhibits bacteria present in the meat without contributing a flavor to the meat; and storing the meat at temperatures above freezing, wherein growth of the bacteria in the meat is inhibited by the propionate salt.

The present invention further relates to a preferred composition which comprises an inorganic propionate salt and a bacteriocin from Pediococcus acidilactici, wherein the composition inhibits Pediococcus, Lactobacilli, Streptococcus, Listeria, Pseudomonas, Salmonella, Enterobacter, and Serratia in meats.

As used herein the term "meat" means animal flesh alone or in combination with various fillers. Such meats include, for instance, beef, poultry and fish. The term "processed" means handling of the flesh after the animal is killed, including slaughter, cutting, mixing, cooking and packaging. All of these steps introduce bacteria.

Preferably the inorganic propionate salt is an alkali metal or alkaline earth metal salt. The propionate salt can be in a pure form or provided as a component of a dried fermentation broth as described by Anderson (U.S. Patent No. 4,497,833) and Ahern et al (U.S. Patent Nos. 4,743,453 and 4,676,987). The Propionibacterium shermanii is used for this purpose. Other transition metal propionate salts can be used but are not preferred so long as they do not impart a taste to the meat.

The propionate salt is used in an amount of less than 1% by weight in the meat, preferably between 0.05 and 0.5% by weight. The composition can also contain chloride salts (e.g. sodium chloride) or nitrite or nitrate salts (e.g. sodium nitrite) or other such salts which inhibit the growth of bacteria. The chloride salt is used in amounts up to 4% by weight of the raw meat. The nitrite salt is limited to 2% by weight of the meat by law in the United States. The composition can also contain various fillers or dispersing liquids.

The bacteria inhibited in the processed meat by the propionate salt include psychrotrophs such as <u>Pseudomonas</u> sp, <u>Salmonella</u> sp such as <u>Salmonella</u> <u>newport</u>; and <u>Listeria</u> sp such as <u>Listeria</u> <u>monocytogenes</u>, <u>Enterobacter</u> sp, such as <u>Enterobacter</u> <u>agglomerans</u>, <u>Serratia</u> sp such as <u>Serratia</u> <u>liquefaciens</u> and other bacteria which occur in processed meat, because of the processing steps including slaughtering.

The Pediococcal bacteriocin is preferably derived from <u>Pediococcus</u> <u>acidilactici</u> NRRL-B-18050 as described in U.S Patent No. 4,883,673 to <u>Gonzalez</u>. The bacteriocin is provided at levels between 1,500 and 5,000 AU of bacteriocin per gram of the composition which is introduced into the meat in a composition with the propionate salt. The result of introducing the composition into the meat is that the meat contains between 15 and 45 AU of the bacteriocin per gram of meat. <u>Pediococci</u>, <u>Lactobacilli</u> and <u>Streptococcus</u> as well as <u>Listeria</u> are inhibited by the bacteriocin.

Preferably the propionate salt alone or with the bacteriocin are provided as a dried composition. The dried composition preferably contains between 10 and 100% propionate salt by weight when used alone. When used with the bacteriocin the dried composition contains between 10 and 99% propionate depending upon the weight of the bacteriocin. The propionate salts and optionally the bacteriocin can also be introduced into the meat as a liquid.

The propionate salts are effective in inhibiting the growth of spoilage organisms when incorporated into a marinade or sauce which dresses a packaged meat product. Additionally, incorporation of propionate salts in the basting solution used to pump meat products by injection provides an appropriate method for delivery of effective concentrations of the propionate salt to fresh meat and poultry products before cooking. The propionate salt can also be mixed with ground or comminuted processed meats.

The meats are usually packaged using flexible films for refrigerated meats or in cans, jars and the like. These packages can allow growth of the bacteria if not perfectly sealed.

SPECIFIC DESCRIPTION

The following are illustrative Examples of the method of the present invention.

<u>Example 1</u>

A fresh, ground, pork sausage formulation was prepared which contained:

| | |
|---|---|
| 3000.0 g | pork (30% fat) |
| 60.0 g | water |
| 75.0 g | salt |
| 16.8 g | spice mix (Paprika, white pepper, caraway seeds, cayenne pepper and ground anise seeds) |
| 0.09 g | ea. BHA/BHT |
| 0.09 g | sodium citrate |

The meat mixture was divided into 4 equal portions. One portion was retained as a control. Sodium propionate was added at 0.08%, 0.15% and 0.30% and the samples were incubated at 5°C. Total aerobic plate count and Gram-negative plate counts were conducted during 12 days incubation at 5°C. As seen in Table 1, as little as 0.08% sodium propionate effectively controlled the growth of Gram-negative spoilage bacteria. The total aerobic bacterial population was reduced 10 fold by the added sodium propionate.

Table 1.  Effect of sodium propionate on the growth of spoilage bacteria in fresh sausage stored at 5°C

| | Total Aerobic[1] Count (Log CFU/gram) | | | | Gram-Negative[2] Count (Log CFU/gram) | | | |
|---|---|---|---|---|---|---|---|---|
| | (Days of Storage at 5°C) | | | | | | | |
| | 0 | 5 | 8 | 12 | 0 | 5 | 8 | 12 |
| Control | 3.98 | 5.65 | 7.36 | 8.10 | 4.89 | 5.72 | 6.11 | 7.66 |
| 0.08% Na Propionate | – | 4.88 | 5.83 | 7.62 | – | 3.41 | 4.52 | 4.25 |
| 0.15% Na Propionate | – | 4.48 | 5.83 | 7.81 | – | 4.15 | 3.79 | 3.76 |
| 0.30% Na Propionate | – | 3.84 | 3.79 | 5.61 | – | 3.90 | 3.52 | 3.76 |

[1]Total aerobic counts were conducted on tryptic soy agar (Difco), at 32°C.

[2]Gram-negative counts were conducted on CVT agar as described by Gilliland et al (Psychrotrophic microorganisms in Compendium of Methods for the Microbiological Examination of Foods. American Public Health Association, Marvin L. Speck, ed. 173-178 (1976)).

Example 2

A fresh sausage was prepared as in Example 1. The sausage was divided into 5 equal portions. One portion was retained as control. The remaining portions were treated with either sodium propionate (0.30% or 0.43%) or calcium propionate (0.29% or 0.42%). The five samples were incubated at 5°C and evaluated for total aerobic count and Gram-negative count during 17 days storage.

The results presented in Table 2 demonstrate that calcium propionate is equally effective as sodium propionate in inhibiting the growth of spoilage organisms in the meat system and provides less sodium in the meat.

Table 2. Comparison of sodium propionate and calcium propionate for inhibition of spoilage bacteria in fresh sausage.

| | Total Aerobic Count[1] (Log CFU/gram) | | | | | Gram-Negative Count[2] (Log CFU/gram) | | | | |
|---|---|---|---|---|---|---|---|---|---|---|
| (Days Storage at 5°C) | | | | | | | | | | |
| | 0 | 8 | 13 | 15 | 17 | 0 | 8 | 13 | 15 | 17 |
| Control | <4.00 | 6.12 | 8.00 | 7.76 | 8.32 | 3.36 | 5.02 | 6.26 | 6.95 | 7.18 |
| 0.30% Na Prop. | – | <4.00 | 5.16 | 5.08 | 6.36 | – | 2.78 | <2.00 | <2.00 | <2.00 |
| 0.43% Na Prop. | – | <4.00 | 5.42 | 6.02 | 7.06 | – | 2.78 | <2.00 | <2.00 | <2.00 |
| 0.29% Ca Prop. | – | <4.00 | 5.13 | 5.24 | 6.46 | – | 3.08 | <2.00 | <2.00 | <2.00 |
| 0.42% Ca Prop. | – | <4.00 | 4.72 | 5.75 | 6.07 | – | – | <2.00 | <2.00 | <2.00 |

[1]See Table 1.

[2]See Table 1.

## Example 3

Fresh sausage was prepared as in Example 1 and was treated with either sodium lactate at 0.38% or sodium propionate at 0.30% which resulted in equivalent concentrations of lactate and propionate. The samples were stored at 5°C and evaluated for total aerobic count and Gram-negative count.

As seen in Table 3, 0.30% sodium propionate inhibited the total aerobic population for 13 days and prevented the increase in the Gram-negative population for 17 days. Conversely, sodium lactate treatment failed to affect the total aerobic count and reduced the Gram-negative count only modestly during the 17 day incubation period.

This demonstrates that the inhibitory activity of propionate salts can be observed at a much lower concentration than might be needed for sodium lactate as set forth in U.S. Patent No. 4,798,729 to Anders et al.

Table 3. Comparison of sodium propionate and sodium lactate for inhibition of spoilage bacteria in fresh sausage.

| | Total Aerobic Count[1] (Log CFU/g) | | | | Gram-Negative Count[2] (Log CFU/g) | | | | |
|---|---|---|---|---|---|---|---|---|---|
| | (days Storage at 5°C) | | | | | | | | |
| | 0 | 9 | 13 | 17 | 0 | 6 | 9 | 13 | 17 |
| Control | 3.72 | 8.03 | 7.83 | 8.25 | 3.26 | 4.68 | 5.34 | 5.11 | 5.38 |
| 0.3% Na Propionate | - | 6.48 | 6.68 | 8.38 | - | 3.00 | 3.15 | 2.90 | 2.48 |
| 0.3% Na Lactate | - | 7.95 | 7.85 | 8.03 | - | 4.10 | 4.98 | 4.64 | 6.71 |

[1]See Table 1
[2]See Table 1.

## Example 4

Inhibition of <u>Salmonella</u> <u>newport</u> in cooked chicken by sodium propionate.

Commercially sterile, canned, cooked chicken was obtained from a local market. The product contained white and dark chunked chicken, salt and water. The salt concentration was determined to be approximately 0.75%. The chicken was inoculated with <u>Salmonella</u> <u>newport</u> to deliver approximately 5000 CFU/gram. The inoculated chicken was divided into 4 portions. Sodium propionate was added to three portions at 0.22%, 0.30% or 0.42%. The fourth portion had no additions and served as the control.

As seen in Table 4, the sodium propionate effectively inhibited the growth of <u>Salmonella</u> <u>newport</u> in the inoculated chicken.

Table 4. Inhibition of <u>Salmonella</u> <u>newport</u> by sodium propionate in cooked chicken.

Log CFU/g[1]

| | Days storage at 5°C | | | | | | |
|---|---|---|---|---|---|---|---|
| | 0 | 6 | 9 | 14 | 19 | 23 | 28 |
| Control | 3.72 | 4.64 | 5.26 | 7.15 | 8.83 | 9.36 | 9.53 |
| 0.22% Na Prop. | - | 3.08 | 3.00 | 3.18 | 4.13 | 4.46 | 5.29 |
| 0.30% Na Prop. | - | 3.15 | 2.60 | 2.30 | <2.00 | 2.00 | <2.00 |
| 0.42% Na Prop. | - | 3.00 | 2.85 | 2.00 | <2.00 | 2.00 | 2.30 |

[1]<u>Salmonella</u> plate counts on tryptic soy agar (Difco) incubated at 32°C. Colonies confirmed as <u>Salmonella</u>.

Example 5

Inhibition of Salmonella newport by calcium propionate in chicken.

Canned chicken was inoculated with Salmonella newport as in Example 4. The inoculated chicken was divided into two portions. Calcium propionate (0.42%) was added to one portion and the second was used as an uninoculated control. The samples were incubated at 5°C.

As noted in Table 5, growth of Salmonella newport was completely inhibited for the entire 27 day incubation. Thus, the calcium propionate inhibits the growth of S. newport as effectively as does the sodium salt (Example 4).

Table 5. Inhibition of Salmonella newport by calcium propionate in processed chicken.

| Days at 5°C | Control (Log CFU/g)[1] | Calcium Propionate (0.42%) |
|---|---|---|
| 0 | 4.11 | |
| 5 | 6.37 | 3.71 |
| 8 | 7.73 | 3.45 |
| 12 | 9.47 | 3.15 |
| 16 | 9.34 | 3.00 |
| 20 | 9.56 | 2.78 |
| 27 | 9.56 | 2.85 |

[1]S. newport counts determined as described in Table 4.

Example 6.

Inhibition of Listeria monocytogenes by calcium propionate in cooked chicken.

Commercially sterile canned chicken was obtained from a local market, as in Example 4. The product contained white and dark chunked chicken, salt and water. The salt concentration was determined to be approximately 0.75%. The chicken was inoculated with a stock culture of Listeria monocytogenes to deliver approximately 4000 CFU/g. The chicken was divided into two portions. Calcium propionate was added to one portion at a rate of 0.42%. The second portion functioned as the control.

As seen in Table 6, 0.42% calcium propionate effectively reduced the growth rate of Listeria monocytogenes in the processed chicken.

Table 6. Inhibition of Listeria monocytogenes by calcium propionate in canned chicken.

| Days at 5°C | Control (Log CFU/g)[1] | Calcium propionate (0.42%) |
|---|---|---|
| 0 | 3.59 | |
| 5 | 7.63 | 4.57 |
| 8 | 8.87 | 4.93 |
| 12 | 9.33 | 5.80 |
| 16 | 9.23 | 6.52 |

1. Listeria plate count on tryptic soy agar (Difco) incubated at 32°C. Colonies confirmed as Listeria.

Example 7

A fresh sausage prepared as in Example 1 was divided into two portions. One portion was retained as the control. The second portion was treated with 1.32% by weight of a dried fermentation broth that contained 38% calcium propionate (0.50 percent by weight of the sausage). The broth was prepared as per Ahern et al (U.S. Patent 4,743,453). The samples were incubated at 5°C Total aerobic counts were conducted on APT agar during 18 days incubation at 5°C. The dried fermentation broth effectively reduced the level of bacterial growth in the sample.

Table 7. Effect of a calcium propionate containing fermentation broth on the growth of spoilage bacteria in fresh sausage at 5°C.

|         | Total Aerobic Count (Log cfu/gram) (Day of Storage at 5°C) | | | |
|---------|------|------|------|------|
|         | 0    | 5    | 11   | 18   |
| Control | 5.69 | 7.13 | 8.41 | 8.72 |
| Test    |      | 5.26 | 5.65 | 6.88 |

Example 8

A propionate containing powder was prepared. One broth was prepared and dried by the method of Ahern et al (U.S. Patent 4,743,453). The second broth was prepared by fermenting a dextrose yeast extract medium by a strain of Pediococcus acidilactici (NRRL-B-18050) by the method described by Gonzalez (U.S. Patent 4,883,673) to produce a bacteriocin. The dried propionate as a powder was added to the bacteriocin containing broth and then dried. Eighty-five percent (85%) by weight of the dried product is the propionate salt containing material and fifteen percent (15%) by weight is the dried bacteriocin containing material. The bacteriocin was present in an amount of about 1600 AU per ml in the broth. The propionate salt was present in an amount of about 32% by weight calcium propionate in the powder. The AU of the powder was about 3000 AU per gram. The bacteriocin provided inhibition of spoilage against various Pediococci, Lactobacilli and Streptococcus, as well as Listeria.

This fermented powder was incorporated into a lemon herb dressing (27% solids) at a rate of 1%. The dressing has a near neutral pH. Chicken breast quarters were dredged through the marinade and vacuum packaged. A control chicken breast was coated with an identical marinade that did not contain the propionate containing solids and similarly vacuum packaged.

The samples were incubated at 5°C for 21 days at which time the samples were evaluated for the increase in the concentration of gram-negative bacteria. The control sample contained $4 \times 10^4$ gram-negative bacteria per gram. Conversely, in the treated sample the gram-negative count was less than 100.

Example 9

The calcium propionate and bacteriocin powder described in Example 8 was evaluated in a canned meat spread which contains nitrite which has a near neutral pH. The commercially available meat spread (SPAM®, Hormel) was inoculated with the hereinafter specified test bacteria at a rate of 5,000 viable cells per gram. The inoculated product was divided into two portions. The calcium propionate and bacteriocin powder was added to one portion at a rate of 1% (contains 0.32% calcium propionate). The second portion of meat served as the control. The samples were incubated at 7°C for 19 days at which time the bacterial population was enumerated.

As seen in Table 8, the propionate powder effectively eliminated Listeria monocytogenes and Salmonella newport. Staphylococcus aureus was significantly reduced.

Table 8. Inhibition of <u>Listeria</u>, <u>Salmonella</u> and <u>Staphylococcus</u> by calcium propionate and bacteriocin powder ALTA™ 1801 in a model meat system[1].

| Test Organism | Rate | Microbial Quality |
|---|---|---|
| <u>Listeria</u> | @ 1.0% | Control >$10^9$ @ 19 days<br>Powder <100 @ 19 days |
| <u>Salmonella</u> | @ 1.0% | Control = $10^7$ @ 19 days<br>Powder <500 @ 19 days |
| <u>Staphylococcus</u> | @ 1.0% | Control = $5x10^7$ @ 19 days<br>Powder = $7x10^4$ @ 19 days |

[1]SPAM® spread was inoculated with <u>Listeria</u> <u>monocytogenes</u>, <u>Salmonella</u> <u>newport</u> or <u>Staphylococcus</u> <u>aureus</u> at a rate of 5,000 viable cells per gram meat. Each inoculated product was divided into two portions. The powder was added to one portion at a rate of 1% by weight (0.32% calcium propionate).

As can be seen from the foregoing description, the propionate salts at near neutral pH's and at refrigeration temperatures inhibited the growth of spoilage bacteria. Taste tests confirmed that the meats with the propionate salts at the low levels (0.05 to 1.0% and preferably 0.5% or less by weight of the meat or meat formulation) did not impart any taste. The bacteriocin is tasteless at the levels used.

## Claims

**Claims for the following Contracting States : AT, BE, CH, DE, DK, FR, GB, GR, IT, LI, LU, NL, SE**

1. A method for protecting an unspoiled processed meat having a pH between pH 6.0 and 6.5 which comprises:

    (a) inoculating the meat with a source of an inorganic propionate salt in an amount less than 1% by weight which inhibits bacteria present in the meat without contributing a flavor to the meat; and
    (b) storing the meat at temperatures above freezing wherein growth of the bacteria in the meat is inhibited by the propionate salt.

2. The method of Claim 1 wherein the salt is selected from the group consisting of calcium propionate and sodium propionate.

3. The method of Claim 1 wherein the propionate salt is used in an amount between 0.05% to 0.5% by weight of the meat.

4. The method of Claim 1 wherein the bacteria are psychrotrophic bacteria.

5. The method of Claim 1 wherein the bacteria include psychrotrophic bacteria.

6. The method of Claim 1 wherein the bacteria include <u>Salmonella</u> <u>newport.</u>

7. The method of Claim 1 wherein the bacteria include <u>Listeria</u> <u>monocytogenes</u>.

8. The method of Claim 1 wherein the meat contains sodium chloride.

9. The method of Claim 8 wherein the sodium chloride is present in an amount up to 4% by weight.

10. The method of Claim 1 wherein the meat is raw which is refrigerated.

11. The method of Claim 1 wherein the meat is canned meat.

12. The method of Claim 1 wherein the meat contains a nitrite salt.

13. The method of Claim 1 wherein along with the inorganic propionate salt, the meat is inoculated with a bacteriocin derived from Pediococcus acidilactici into the meat in an amount which inhibits Pediococci, Lactobacilli and Streptococcus.

14. The method of Claim 13 wherein the propionate salt and the bacteriocin are provided together as a dried product derived from combining fermentation broths from Propionibacterium shermanii and from the Pediococcus acidilactici and drying the combined broths to provide the dried product.

15. A composition which comprises:
    an inorganic propionate salt and a bacteriocin derived from Pediococcus acidilactici, wherein the composition inhibits Pediococci, Lactobacilli, Streptococcus, Listeria, Pseudomonas, Salmonella, Enterobacter, and Serratia in meats.

16. The composition of Claim 15 wherein the composition is effective at levels of less than 1% by weight in the meat.

17. The composition of Claim 15 wherein the inorganic propionate salt is provided by fermenting Propionibacterium shermanii in a broth with neutralization to provide a fermented broth and mixing the Propionibacterium shermanii derived fermented broth with a fermented broth from the Pediococcus acidilactici and drying the mixture to produce a dried product which can be introduced into the meat.

18. The composition of Claim 17 wherein the dried product is effective at levels less than 1% by weight in the meat.

19. The composition of Claim 15 as a dried product wherein the composition contains between 1500 and 5000 AU per gram of the bacteriocin and wherein the propionate Salt is present in an amount between 10 and 99 percent by weight of the composition.

20. The composition of Claim 15 wherein the inorganic propionate salt is a chemically pure form.

**Claims for the following Contracting State : ES**

1. A method for protecting an unspoiled processed meat having a pH between pH 6.0 and 6.5 which comprises:
    (a) inoculating the meat with a source of an inorganic propionate salt in an amount less than 1% by weight which inhibits bacteria present in the meat without contributing a flavor to the meat; and
    (b) storing the meat at temperatures above freezing wherein growth of the bacteria in the meat is inhibited by the propionate salt.

2. The method of Claim 1 wherein the salt is selected from the group consisting of calcium propionate and sodium propionate.

3. The method of Claim 1 wherein the propionate salt is used in an amount between 0.05% to 0.5% by weight of the meat.

4. The method of Claim 1 wherein the bacteria are psychrotrophic bacteria.

5. The method of Claim 1 wherein the bacteria include psychrotrophic bacteria.

6. The method of Claim 1 wherein the bacteria include Salmonella newport.

7. The method of Claim 1 wherein the bacteria include Listeria monocytogenes.

8. The method of Claim 1 wherein the meat contains sodium chloride.

9. The method of Claim 8 wherein the sodium chloride is present in an amount up to 4% by weight.

10. The method of Claim 1 wherein the meat is raw which is refrigerated.

11. The method of Claim 1 wherein the meat is canned meat.

12. The method of Claim 1 wherein the meat contains a nitrite salt.

13. The method of Claim 1 wherein along with the inorganic propionate salt, the meat is inoculated with a bacteriocin derived from Pediococcus acidilactici into the meat in an amount which inhibits Pediococci, Lactobacilli and Streptococcus.

14. The method of Claim 13 wherein the propionate salt and the bacteriocin are provided together as a dried product derived from combining fermentation broth from Propionibacterium shermanii and from the Pediococcus acidilactici and drying the combined broths to provide the dried product.

15. A process for producing a composition inhibiting Pediococci, Lactobacilli, Streptococcus, Listeria, Pseudomonas, Salmonella, Enterobacter, and Serratia in meats which comprises combining an inorganic propionate salt and a bacteriocin derived from Pediococcus acidilactici.

16. The process of Claim 15 wherein the composition is effective at levels of less than 1% by weight in the meat.

17. The process of Claim 15 wherein the inorganic propionate salt is provided by fermenting Propionibacterium shermanii in a broth with neutralization to provide a fermented broth and mixing the Propionibacterium shermanii derived fermented broth with a fermented broth from the Pediococcus acidilactici and drying the mixture to produce a dried product which can be introduced into the meat.

18. The process of Claim 17 wherein the dried product is effective at levels less than 1% by weight in the meat.

19. The process of Claim 15 wherein the composition contains as a dried product between 1500 and 5000 AU per gram of the bacteriocin and wherein the propionate salt is present in an amount between 10 and 99 percent by weight of the composition.

20. The process of Claim 15 wherein the inorganic propionate salt is a chemically pure form.


**Patentansprüche**

**Patentansprüche für folgende Vertragsstaaten : AT, BE, CH, DE, DK, FR, GB, GR, IT, LI, LU, NL, SE**

1. Verfahren zum Schützen eines unverdorbenen behandelten Fleisches mit einem pH-Wert zwischen 6,0 und 6,5, welches
   (a) das Beimpfen des Fleisches mit einer Quelle eines anorganischen Propionatsalzes in einer Menge von weniger als 1 Gew.-%, welches Bakterien, die in dem Fleisch anwesend sind, inhibiert, ohne einen Geschmack zum Fleisch beizutragen; und
   (b) das Lagern des Fleisches bei Temperaturen oberhalb des Gefrierpunktes, wobei das Wachstum der Bakterien im Fleisch durch das Propionatsalz inhibiert wird,
   umfaßt.

2. Verfahren nach Anspruch 1, worin das Salz ausgewählt ist aus der Gruppe, bestehend aus Calciumpropionat und Natriumpropionat.

3. Verfahren nach Anspruch 1, worin das Propionatsalz in einer Menge zwischen 0,05 und 0,5 Gew.-% des Fleisches verwendet wird.

4. Verfahren nach Anspruch 1, worin die Bakterien psychrotrophe Bakterien sind.

5. Verfahren nach Anspruch 1, worin die Bakterien psychrotrophe Bakterien umfassen.

6. Verfahren nach Anspruch 1, worin die Bakterien Salmonella newport umfassen.

7. Verfahren nach Anspruch 1, worin die Bakterien Listeria monocytogenes umfassen.

8. Verfahren nach Anspruch 1, worin das Fleisch Natriumchlorid enthält.

9. Verfahren nach Anspruch 8, worin das Natriumchlorid in einer Menge von 4 Gew.-% anwesend ist.

10. Verfahren nach Anspruch 1, worin das Fleisch roh ist, das tiefgekühlt ist.

11. Verfahren nach Anspruch 1, worin das Fleisch Dosenfleisch ist.

12. Verfahren nach Anspruch 1, worin das Fleisch Nitritsalz enthält.

13. Verfahren nach Anspruch 1, worin analog zu dem anorganischen Propionatsalz das Fleisch mit einem Bakteriozin, das von Pediokokkus acidilactici abstammt, in das Fleisch beimpft wird in einer Menge, die Pediokokki, Lactobazilli und Streptokokkus hemmt.

14. Verfahren nach Anspruch 13, worin das Propionatsalz und das Bakteriozin zusammen als ein Trockenprodukt bereitgestellt sind, das durch Kombinieren der Fermentationsflüssigkeiten von Propionibakterium shermanii und von Pediokokkus acidilactici und Trocknen der kombinierten Flüssigkeiten, um das trockene Produkt bereitzustellen, hergestellt ist.

15. Zusammensetzung, umfassend:
ein anorganisches Propionatsalz und ein Bakteriozin, welches von Pediokokkus acidilactici abstammt, worin die Zusammensetzung Pediokokki, Lactobazilli, Streptokokkus, Listeria, Pseudomonas, Salmonella, Enterobakter, und Serratia in Fleisch inhibiert.

16. Zusammensetzung nach Anspruch 15, worin die Zusammensetzung in Mengen von weniger als 1 Gew.-% in dem Fleisch wirksam ist.

17. Zusammensetzung nach Anspruch 15, worin das anorganische Propionatsalz durch Fermentation von Propionibakterium shermanii in einer Flüssigkeit mit Neutralisation bereitgestellt wird, um eine fermentierte Flüssigkeit bereitzustellen, und Mischen der von Propionibakterium shermanii abstammenden fermentierten Flüssigkeit mit einer fermentierten Flüssigkeit von Pediokokkus acidilactici und Trocknen der Mischung, um ein getrocknetes Produkt herzustellen, welches in das Fleisch eingeführt werden kann.

18. Zusammensetzung nach Anspruch 17, worin das getrocknete Produkt in Mengen von weniger als 1 Gew.-% in dem Fleisch wirksam ist.

19. Zusammensetzung nach Anspruch 15 als getrocknetes Produkt, worin die Zusammensetzung zwischen 1500 und 5000 AU pro Gramm des Bakteriozins enthält und worin das Propionatsalz in einer Menge von 10 bis 99 Gew.-% der Zusammensetzung anwesend ist.

20. Zusammensetzung nach Anspruch 15, worin das anorganische Propionatsalz eine chemisch reine Form ist.

**Patentansprüche für folgenden Vertragsstaat : ES**

1. Verfahren zum Schützen eines unverdorbenen behandelten Fleisches mit einem pH-Wert zwischen 6,0 und 6,5, welches
(a) das Beimpfen des Fleisches mit einer Quelle eines anorganischen Propionatsalzes in einer Menge von weniger als 1 Gew.-%, welches Bakterien, die in dem Fleisch anwesend sind, inhibiert, ohne einen Geschmack zum Fleisch beizutragen; und
(b) das Lagern des Fleisches bei Temperaturen oberhalb des Gefrierpunktes, wobei das Wachstum der Bakterien im Fleisch durch das Propionatsalz inhibiert wird,

umfaßt.

2. Verfahren nach Anspruch 1, worin das Salz ausgewählt ist aus der Gruppe, bestehend aus Calciumpropionat und Natriumpropionat.

3. Verfahren nach Anspruch 1, worin das Propionatsalz in einer Menge zwischen 0,05 und 0,5 Gew.-% des Fleisches verwendet wird.

4. Verfahren nach Anspruch 1, worin die Bakterien psychrotrophe Bakterien sind.

5. Verfahren nach Anspruch 1, worin die Bakterien psychrotrophe Bakterien umfassen.

6. Verfahren nach Anspruch 1, worin die Bakterien Salmonella newport umfassen.

7. Verfahren nach Anspruch 1, worin die Bakterien Listeria monocytogenes umfassen.

8. Verfahren nach Anspruch 1, worin das Fleisch Natriumchlorid enthält.

9. Verfahren nach Anspruch 8, worin das Natriumchlorid in einer Menge von 4 Gew.-% anwesend ist.

10. Verfahren nach Anspruch 1, worin das Fleisch roh ist, das tiefgekühlt ist.

11. Verfahren nach Anspruch 1, worin das Fleisch Dosenfleisch ist.

12. Verfahren nach Anspruch 1, worin das Fleisch Nitritsalz enthält.

13. Verfahren nach Anspruch 1, worin analog zu dem anorganischen Propionatsalz das Fleisch mit einem Bakteriozin, das von Pediokokkus acidilactici abstammt, in das Fleisch beimpft wird in einer Menge, die Pediokokki, Lactobazilli und Streptokokkus hemmt.

14. Verfahren nach Anspruch 13, worin das Propionatsalz und das Bakteriozin zusammen als ein Trockenprodukt bereitgestellt sind, das durch Kombinieren der Fermentationsflüssigkeiten von Propionibakterium shermanii und von Pediokokkus acidilactici und Trocknen der kombinierten Flüssigkeiten, um das trockene Produkt bereitzustellen, hergestellt ist.

15. Verfahren zum Herstellen einer Zusammensetzung, welche Pediokokki, Lactobazilli, Strentokokkus, Listeria, Pseudomonas, Salmonella, Enterobakter und Serratia in Fleisch inhibiert, welches das Verbinden eines anorganischen Propionat-Salzes und eines Bakteriozins, welches von Pediokokkus acidilactici abstammt, umfaßt.

16. Verfahren nach Anspruch 15, worin die Zusammensetzung in Mengen von weniger als 1 Gew.-% in dem Fleisch wirksam ist.

17. Verfahren nach Anspruch 15, worin das anorganische Propionatsalz durch Fermentieren von Propionibakterium shermanii in einer Flüssigkeit mit Neutralisation bereitgestellt wird, um eine fermentierte Flüssigkeit bereitzustellen, und Mischen der von Propionibakterium shermanii abstammenden fermentierten Flüssigkeit mit einer fermentierten Flüssigkeit von Pediokokkus acidilactici und Trocknen der Mischung, um ein getrocknetes Produkt herzustellen, welches in das Fleisch eingeführt werden kann.

18. Verfahren nach Anspruch 17, worin das getrocknete Produkt in Mengen von weniger als 1 Gew.-% in dem Fleisch wirksam ist.

19. Verfahren nach Anspruch 15, worin die Zusammensetzung als getrocknetes Produkt zwischen 1500 und 5000 AU pro Gramm des Bakteriozins enthält und worin das Propionatsalz in einer Menge von 10 bis 99 Gew.-% der Zusammensetzung anwesend ist.

20. Verfahren nach Anspruch 15, worin das anorganische Propionatsalz eine chemisch reine Form ist.

**Revendications**

**Revendications pour les Etats contractants suivants : AT, BE, CH, DE, DK, FR, GB, GR, IT, LI, LU, NL, SE**

1. Procédé de protection d'une viande traitée non altérée ayant un pH compris entre 6,0 et 6,5, qui consiste :
   (a) à inoculer la viande avec une source d'un propionate minéral en une quantité inférieure à 1 % en poids pour inhiber les bactéries présentes dans la viande sans contribuer à la saveur de la viande ; et
   (b) à emmagasiner la viande à une température supérieure à la congélation, ce qui inhibe la croissance des bactéries dans la viande par l'action du propionate.

2. Procédé selon la revendication 1, dans lequel le sel est choisi parmi le propionate de calcium et le propionate de sodium.

3. Procédé selon la revendication 1, dans lequel on utilise le propionate à raison de 0,05 à 0,5 % en poids de la viande.

4. Procédé selon la revendication 1, dans lequel les bactéries sont des bactéries psychrotrophes.

5. Procédé selon la revendication 1, dans lequel les bactéries contiennent des bactéries psychrotrophes.

6. Procédé selon la revendication 1, dans lequel les bactéries sont notamment Salmonella newport.

7. Procédé selon la revendication 1, dans lequel les bactéries sont notamment Listeria monocytogenes.

8. Procédé selon la revendication 1, dans lequel la viande contient du chlorure de sodium.

9. Procédé selon la revendication 8, dans lequel le chlorure de sodium est présent en une quantité pouvant atteindre 4 % en poids.

10. Procédé selon la revendication 1, dans lequel la viande est crue et réfrigérée.

11. Procédé selon la revendication 1, dans lequel la viande est une viande en conserve.

12. Procédé selon la revendication 1, dans lequel la viande contient un nitrite.

13. Procédé selon la revendication 1, dans lequel, ensemble avec le propionate minéral, la viande est inoculée avec une bactériocine dérivée de Pediococcus acidilactici en une quantité qui inhibe Pediococci, Lactobacilli et Streptococcus.

14. Procédé selon la revendication 13, dans lequel le propionate et la bactériocine sont fournis ensemble sous forme d'un produit séché dérivé d'une combinaison des bouillons de fermentation de Propionibacterium shermanii et de Pediococcus acidilactici et du séchage des bouillons combinés pour obtenir des produits séchés.

15. Composition qui comprend un propionate minéral et une bactériocine dérivée de Pediococcus acidilactici, cette composition inhibant dans les viandes les Pediococci, Lactobacillli, Streptococcus, Listeria, Pseudomonas, Salmonella, Enterobacter et Serratia.

16. Composition selon la revendication 15, qui est efficace à raison de moins de 1 % en poids de la viande.

17. Composition selon la revendication 15, dans laquelle le propionate minéral est obtenu par fermentation de Propionibacterium shermanii dans un bouillon avec neutralisation afin d'obtenir un bouillon fermenté et mélange du bouillon fermenté dérivé de Propionibacterium shermanii avec un bouillon fermenté provenant de Pediococcus acidilactici et séchage du mélange pour obtenir un produit séché qu'on introduit dans la viande.

18. Composition selon la revendication 17, dans laquelle le produit séché est efficace en des proportions inférieures à 1 % en poids de la viande.

19. Composition selon la revendication 15, sous forme d'un produit séché, composition qui contient 1.500 à 5.000 UA par gramme de bactériocine et dans laquelle le propionate est présent en une quantité de 10 à 99 % en poids de la composition.

**20.** Composition selon la revendication 15, dans laquelle le propionate minéral est sous une forme chimiquement pure.

**Revendications pour l'Etat contractant suivant : ES**

**1.** Procédé de protection d'une viande traitée non altérée ayant un pH compris entre 6,0 et 6,5, qui consiste :
(a) à inoculer la viande avec une source d'un propionate minéral en une quantité inférieure à 1 % en poids pour inhiber les bactéries présentes dans la viande sans contribuer à la saveur de la viande ; et
(b) à emmagasiner la viande à une température supérieure à la congélation, ce qui inhibe la croissance des bactéries dans la viande par l'action du propionate.

**2.** Procédé selon la revendication 1, dans lequel le sel est choisi parmi le propionate de calcium et le propionate de sodium.

**3.** Procédé selon la revendication 1, dans lequel on utilise le propionate à raison de 0,05 à 0,5 % en poids de la viande.

**4.** Procédé selon la revendication 1, dans lequel les bactéries sont des bactéries psychrotrophes.

**5.** Procédé selon la revendication 1, dans lequel les bactéries contiennent des bactéries psychrotrophes.

**6.** Procédé selon la revendication 1, dans lequel les bactéries sont notamment Salmonella newport.

**7.** Procédé selon la revendication 1, dans lequel les bactéries sont notamment Listeria monocytogenes.

**8.** Procédé selon la revendication 1, dans lequel la viande contient du chlorure de sodium.

**9.** Procédé selon la revendication 8, dans lequel le chlorure de sodium est présent en une quantité pouvant atteindre 4 % en poids.

**10.** Procédé selon la revendication 1, dans lequel la viande est crue et réfrigérée.

**11.** Procédé selon la revendication 1, dans lequel la viande est une viande en conserve.

**12.** Procédé selon la revendication 1, dans lequel la viande contient un nitrite.

**13.** Procédé selon la revendication 1, dans lequel, ensemble avec le propionate minéral, la viande est inoculée avec une bactériocine dérivée de Pediococcus acidilactici en une quantité qui inhibe Pediococci, Lactobacilli et Streptococcus.

**14.** Procédé selon la revendication 13, dans lequel le propionate et la bactériocine sont fournis ensemble sous forme d'un produit séché dérivé d'une combinaison des bouillons de fermentation de Propionibacterium shermanii et de Pediococcus acidilactici et du séchage des bouillons combinés pour obtenir des produits séchés.

**15.** Procédé de production d'une composition qui inhibe dans les viandes Pediococci, Lactobacillli, Streptococcus, Listeria, Pseudomonas, Salmonella, Enterobacter et Serratia, qui consiste à combiner un propionate minéral et une bactériocine dérivée de Pediococcus acidilactici.

**16.** Procédé selon la revendication 15, dans lequel la composition est efficace en des proportions inférieures à 1 % en poids de la viande.

**17.** Procédé selon la revendication 15, dans lequel on obtient le propionate minéral en faisant fermenter Propionibacterium shermanii dans un bouillon avec neutralisation pour obtenir un bouillon fermenté et en mélangeant le bouillon fermenté provenant de Propionibacterium shermanii avec un bouillon fermenté provenant de Pediococcus acidilactici, puis en séchant le mélange pour obtenir un produit séché qu'on peut introduire dans la viande.

**18.** Procédé selon la revendication 17, dans lequel le produit séché est efficace en une proportion inférieure à 1 % en poids de la viande.

**19.** Procédé selon la revendication 15, dans lequel la composition contient sous forme d'un produit séché, de 1.500 à 5.000 UA par gramme de bactériocine et dans lequel le propionate est présent en une quantité de 10 à 99 % en poids de la composition.

**20.** Procédé selon la revendication 15, dans lequel le propionate minéral est sous une forme chimiquement pure.